# EUROPEAN PATENT APPLICATION

(11) **EP 1 605 366 A1**
(43) Date of publication of application: **14.12.2005**
(21) Application number: 04716728.3
(22) Date of filing: 03.03.2004
(51) Int. Cl.: G06F 17/21

(54) **DATA PROCESSING APPARATUS, DATA PROCESSING METHOD, DATA PROCESSING PROGRAM, AND RECORDING MEDIUM HAVING RECORDED THEREIN THAT PROGRAM**

(30) Priority: 13.03.2003 JP 2003067886
(71) Applicant: SHARP KABUSHIKI KAISHA, Osaka-shi, Osaka 545-8522 (JP)
(72) Inventor: HIROSAWA, Masashi, 2-502, Takanoharahigashi Danchi, Soraku-gun, Kyoto 619-0223 (JP); SAWADA, Yuji, Nara-shi, Nara 630-8303 (JP); NAKAMURA, Masaya, Ikoma-gun, Nara 639-1061 (JP)
(74) Representative: Brown, Kenneth Richard
(86) International application number: PCT/JP2004/002674
(87) International publication number: WO 2004/081809

(57) **Abstract**

A data processing apparatus (100) displays electronic data (101) having a hierarchical structure, while referring to the corresponding sub block data (102). Firstly, in that display processing, a block including designated data is read (S101, S102, SD, 104), based on the sub block data (102) as read, from the electronic data (101). Then, the sub block data (102) is used to analyze the hierarchical structure of the block data as read (S103, S114, S111), then a result of that analysis is used to calculate a layout, and then the display processing is performed in accordance with the calculated layout (S106, S107). A plurality of blocks can be acquired by dividing the electronic data (101) based on the block boundary data including data indicative of a page boundary.

## Description

### Technical Field

The present invention relates generally to apparatuses, methods and programs provided to process electronic data having a hierarchical structure and storage media having the program stored therein, and particularly to apparatuses, methods and programs employed to analyze the electronic data's hierarchical structure and employing a result thereof for processing, and storage media having the program stored therein.

### Background Art

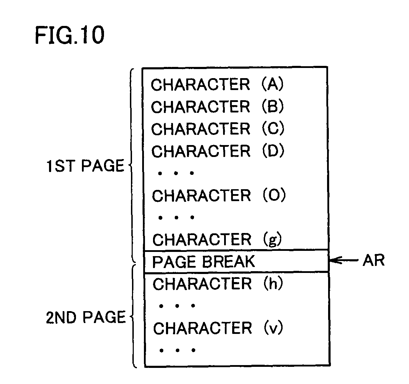

A document which is not fixed in layout and instead has a layout dynamically varying depending on the screen, the character's size, and the like, is laid out on a display device and thus displayed for the sake of illustration. Fig. 10 shows document data by way of example and Fig. 11A shows one screen displaying 15 characters, as set, to display a document by way of example. This document has a concept similar to a logical page (chapter) different from the display screen for the sake of illustration.

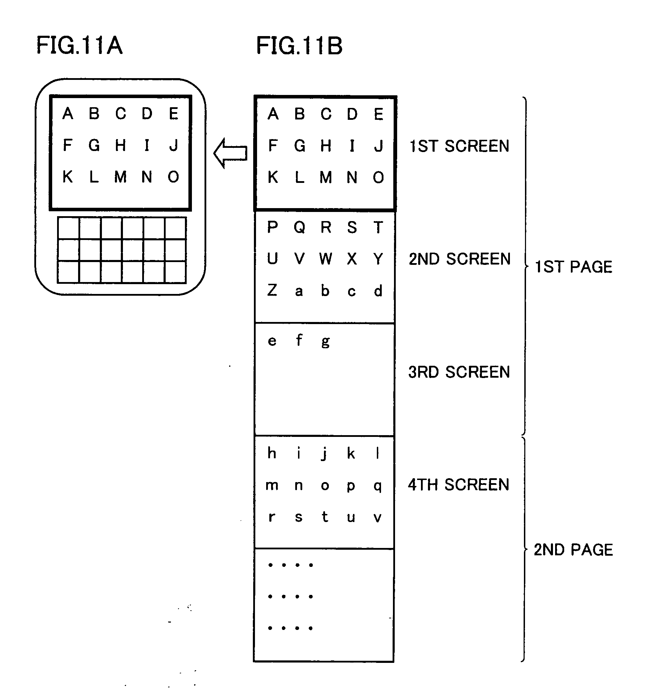

With reference to Fig. 10, between a character (g) and a character (h) there exists page break information, as indicated by an arrow AR. When the Fig. 10 document data is displayed on a screen, as shown in Fig. 11B, a page break is introduced at a third screen at "g" and a subsequently displayed, fourth screen starts with "h".

One such well-known format of electronic data structured to execute a described process in accordance with a definition of a document description language for recording a hierarchically structured document, is extensible markup language (XML). In recent years, XML is increasingly used for electronic documents, electronic data and the like exchanged on the Internet.

One processing method handling XML electronic data is SAX (a simple application programming interface (API) for XML). SAX allows electronic data to sequentially be read from the top, while allowing only a read element to be analyzed in structure and processed. As the electronic data can sequentially be processed without waiting until the electronic data is entirely analyzed, which advantageously contributes to reduced overhead in processing rate and memory capacity. An apparatus analyzing electronic data's hierarchical structure and employing a result thereof to execute a prescribed process, as described above, is proposed for example in WO 02/103554A1.

If the Fig. 11A actual screen displays a first screen shown in Fig. 11B (corresponding to a screen displaying characters (A)-(O)), and a user issues an instruction to introduce a logical page break, second and third screens shown in Fig. 11B will be skipped and a fourth screen displayed. A SAX or similar sequential process, however, is done for each control code. Accordingly, the document data is searched through until the page break information indicated in Fig. 10 by arrow AR is found, and when the information is found, a page break process is performed. Thus, updating the first screen to display the fourth screen, as corresponding to displaying a page break as described above, would consume time.

Furthermore, if document data has page break information including an indication of a restriction associated with displaying for preceding and following pages, and a user issues an instruction to introduce a logical page break, it must be determined whether the preceding and following pages can be panned. This also cannot be done without searching through the document data and finding page break information, and thus updating displaying in response to the instruction consumes time.

The present invention contemplates a data processing apparatus, data processing method, data processing program, and storage medium having the program sorted therein to perform a page by page data process rapidly.

### Disclosure of the Invention

The present invention in one aspect provides a data processing apparatus processing electronic data having a hierarchical structure with reference to subblock data dividing the electronic data into a plurality of blocks to process the electronic data. The apparatus includes: block reading means reading from the electronic data a block including designated data; means employing the subblock data for analyzing the designated data's hierarchical structure; and means employing the analysis means' resultant analysis for performing a prescribed process. The plurality of blocks are obtained by division in accordance with block boundary data associated with the electronic data and including data indicating a page boundary.

Thus when the electronic data is processed as prescribed it is processed for each read block. As the block is provided by division in accordance with data included in boundary data and indicating a page boundary, the electronic data can be processed, as prescribed, page by page. Furthermore, as the electronic data can be read for each block and thus processed as prescribed, the electronic data can be processed faster than when it is entirely read and processed.

The data indicating the page boundary preferably indicates a position of page break indication information set in the electronic data. Thus the electronic data can be divided into blocks at the page break indication information's set position.

The subblock data preferably includes page data corresponding to each of the plurality of blocks and referenced to perform the prescribed process page by page. The hierarchical structure based on the page of the designated data of the block read by the block reading means can be analyzed using the page data of the subblock data.

The page data preferably includes indicating whether a subject to be processed may be moved from a page including a corresponding one of the blocks to a different page when the prescribed process is performed. Thus when the subblock data's resultant analysis is used to perform the prescribed process the subject to be processed can be moved from a read block to a different block, as controlled such that a page including a subject block serves as a unit.

Preferably the electronic data is electronic data displayed and the prescribed process is a process calculating a layout of the block read, and displaying the block in the layout. The block's layout can be calculated and displayed by a process controlled page by page.

The present invention in another aspect provides a data processing apparatus generating subblock data referenced to divide electronic data having a hierarchical structure into a plurality of blocks and perform a prescribed process for each the block. The apparatus includes: extraction means extracting a candidate boundary at each block boundary in dividing the electronic data into a prescribed block size; determination means determining from the candidate boundary a position for division into blocks; acquisition means acquiring information indicating a feature of the hierarchical structure for each block having the position for division determined; and generation means generating for each block subblock data including positional information indicating the position for division and information indicating the feature of the hierarchical structure as acquired by the acquisition means. The candidate boundary includes a candidate indicating a page boundary.

Preferably the acquisition means acquires information indicating a feature of the hierarchical structure at top and bottom positions of each block for which a position for division is determined.

The electronic data can be processed for each block, as prescribed, with reference to subblock data that can be generated to include positional information of a position for division of a block as determined from a page boundary. The electronic data can be processed, as prescribed, page by page for the block(s) of each page.

The present invention in still another aspect provides a data processing method processing electronic data having a hierarchical structure with reference to subblock data dividing the electronic data into a plurality of blocks to process the electronic data. The method includes the steps of reading in from the electronic data a block including designated data; analyzing by the subblock data the designated data's hierarchical structure; and employing the resultant analysis to perform a prescribed process. The plurality of blocks are obtained by division in accordance with block boundary data associated with the electronic data and including data indicating a page boundary.

The present invention in still another aspect provides a data processing method generating subblock data referenced to divide electronic data having a hierarchical structure into a plurality of blocks and perform a prescribed process for each the block. The method includes the steps of: extracting a candidate boundary at each block boundary in dividing the electronic data into a prescribed block size; determining a position from the candidate boundary for division into blocks; acquiring information indicating a feature of the hierarchical structure for each block having the position for division determined; and generating for each block subblock data including positional information indicating the position for division for each block and information indicating the feature of the hierarchical structure as acquired at the step of acquiring. The candidate boundary includes a candidate indicating a page boundary.

Preferably the step of acquiring acquires information indicating a feature of the hierarchical structure at top and bottom positions of each block for which a position for division is determined.

The present invention in still another aspect provides a data processing program each causing a computer to execute each above described data processing method.

The present invention in still another aspect provides a storage medium each machine readable and having each above described data processing program stored therein.

### Brief Description of the Drawings

Fig. 1 shows by way of example a configuration of a data processing apparatus and its periphery in an embodiment of the present invention.
Figs. 2A and 2B are a flow chart of a procedure generating subblock data.
Fig. 3 shows electronic data 101 and its logically divided data, by way of example.
Fig. 4 shows one example of the subblock data.
Fig. 5 is a flow chart of a display process.
Fig. 6 is a flow chart of a procedure followed to determine a subject block by a jump at step SA.
Fig. 7 is a flow chart of a procedure followed to determine a subject block by panning a page at step SB.
Fig. 8 is a flow chart of a procedure followed to determine a subject block in feeding a line at step SC.
Fig. 9 shows a configuration of a computer to which the data processing apparatus is applied.
Fig. 10 illustrates exemplary document data for illustrating conventional art.
Figs. 11A and 11B illustrate an example of displaying when an instruction is issued to introduce a logical page break as conventional.

### Best Mode for Carrying Out the Invention

Hereinafter the present invention in embodiments will be described with reference to the drawings more specifically.

### First Embodiment

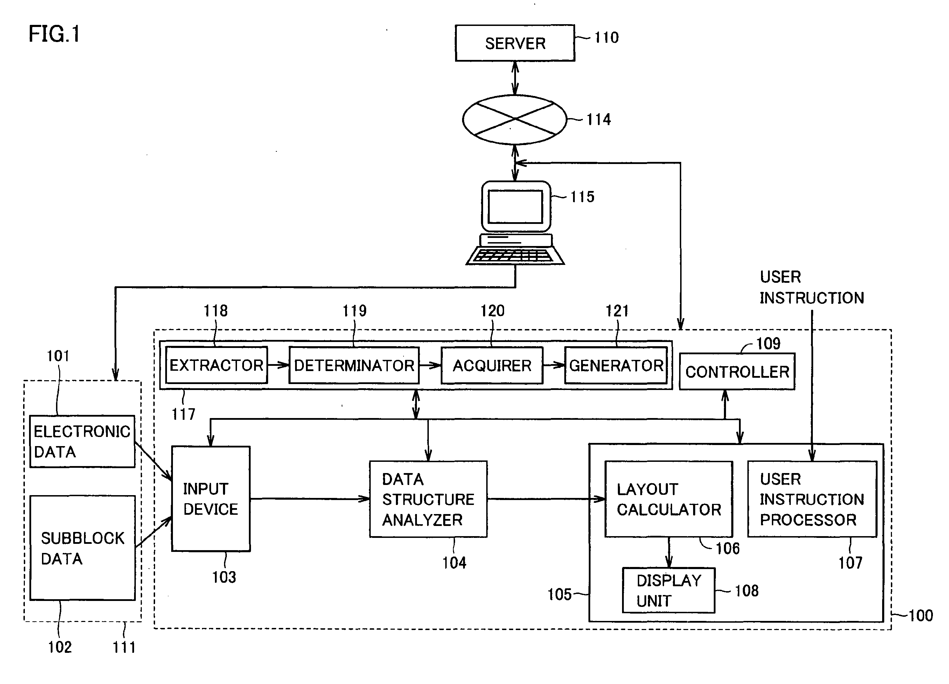

Fig. 1 shows by way of example a configuration of a data processing apparatus 100 and its periphery in the present embodiment. With reference to the figure, connected to data processing apparatus 100 to supply data thereto are a server (a server computer) 110 connected to a network 114, a personal computer (hereinafter simply referred to as a "computer") 115 communicating with server 110 via network 114, and a storage medium 111.

Server 110 receives a request from a user for electronic data, and reads the electronic data from a database (not shown) and transmits the data to the requester. Network 114 is a variety of networks such as the Internet interconnecting server 110 and the user's computer 115. Storage medium 111 receives and stores therein the electronic data supplied from computer 115, and reads and supplies the data to data processing apparatus 100.

The Fig. 1 computer 115 may be replaced with electronic data reception apparatus installed for example in a convenience store, a station and the like and storage medium 111 may store electronic data supplied from the electronic data reception apparatus. In that case, the user of storage medium 111 having stored therein the electronic data supplied from the electronic data reception apparatus may be charged.

Furthermore, electronic data transmitted (or supplied) from server 110 on network 114 may not be transmitted through computer 115 and instead received by data processing apparatus 100 and stored to storage medium 111.

Storage medium 111 stores data including electronic data 101 that can be a subject to be processed by data processing apparatus 100, and subblock data 102 accompanying electronic data 101. Electronic data 101 is generated for example by employing XML or a similar data format that is structured electronic data for executing a prescribed process in accordance with a definition of a document description language for storing a document having a hierarchical structure. Subblock data 102 is data referenced to allow data processing apparatus 100 to divide electronic data 101 into a plurality of blocks and process each block, as prescribed. Subblock data 102 is generated for electronic data 101 and correlated (or associated) with the electronic data and thus stored in storage medium 111.

Data processing apparatus 100 includes an input device 103 reading electronic data 101 and subblock data 102 from storage medium 111, a data structure analyzer 104 analyzing data's hierarchical structure from electronic data 101 and subblock data 102 read via input device 103, a processor 105 performing a prescribed process as based on the hierarchical structure analyzed by data structure analyzer 104, a subblock data generator 117, and a controller 109 controlling input device 103, data structure analyzer 104, processor 105 and subblock data generator 117. Subblock data generator 117 includes an extractor 118, a determinator 119, an acquirer 120 and a generator 121, which components' functions will be described later.

Processor 105 is different in configuration depending on specific content of electronic data 101 to be processed and how it is processed. For example, if data processing apparatus 100 is an apparatus processing displaying monograph, textbooks, magazines, novels, articles or similar text's electronic documents, electronic data or the like exchanged on the Internet, then, as shown in Fig. 1, processor 105 includes a layout calculator 106 employing a resultant analysis provided by data structure analyzer 104 to calculate the text's layout to display it, a display unit 108 displaying electronic data 101 as based on the layout, and user instruction processor 107 receiving and processing an external user instruction, such as scrolling a screen.

If electronic data 101 is voice, processor 105 is modified to be a reading device. Furthermore, for display unit 108 is modified to be an audio reproducer, and layout calculator 106 is modified to be a component that determines which portion to be read or not and which portion to be stressed or not when the portion is read and that also introduces an interval between read portions. When the electronic data is voice, the data's hierarchical structure may be considered in changing an audio attribute in reading. Furthermore, if the electronic data is voice, data processing apparatus 100 requires a scenario interpreter, an audio output device, and a synchronizer synchronizing each component to control an order of reproduction.

### Configuration of Subblock Data and Generation Procedure Thereof

Subblock data 102 can be generated by any of server 110, computer 115 and data processing apparatus 100. Subblock data 102 generated by server 110 is once stored to storage medium 111 via network 114 and computer 115 and then provided to data processing apparatus 100. Subblock data 102 generated by computer 115 is once stored to storage medium 111 and then provided to data processing apparatus 100. Furthermore, subblock data 102 generated by server 110 may not be transmitted through computer 115 and instead transmitted on network 114 and thus supplied to data processing apparatus 100. In that case, subblock data 102 supplied to data processing apparatus 100 would once be received therein for example by controller 109 and stored therein at an internal buffer (not shown).

Furthermore, if data processing apparatus 100 generates subblock data 102, controller 109 will use electronic data read from storage medium 111 via input device 103 or from server 110 via network 114 and follows a prescribed procedure, as will be described later, to generate subblock data 102.

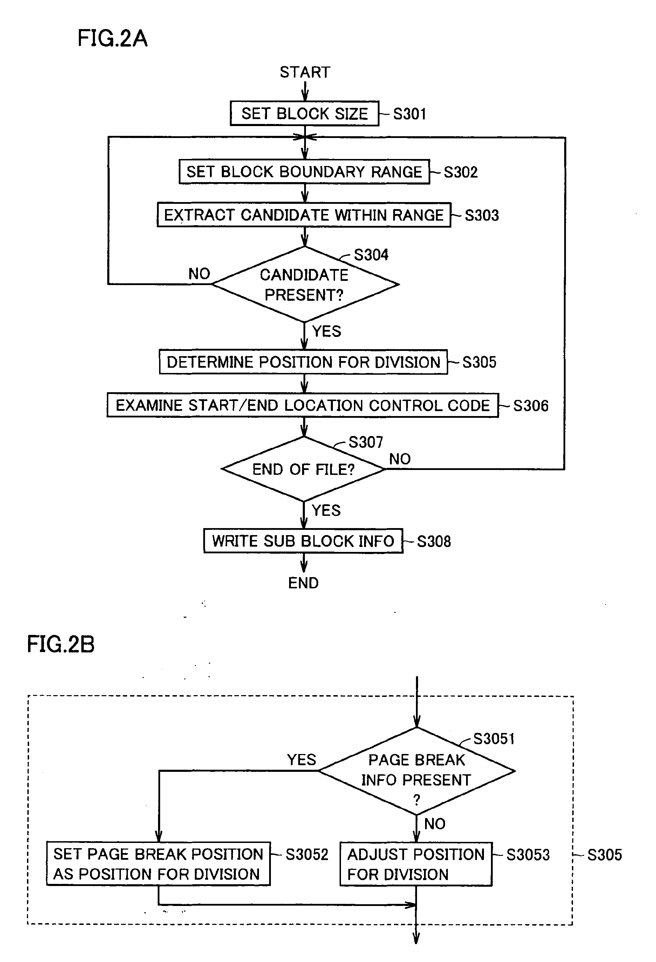

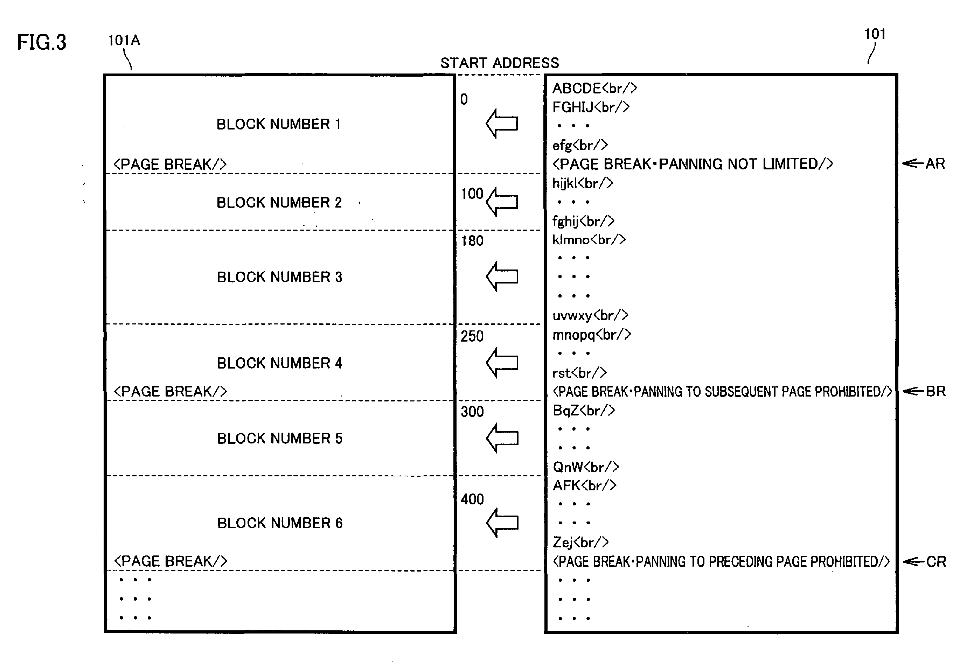

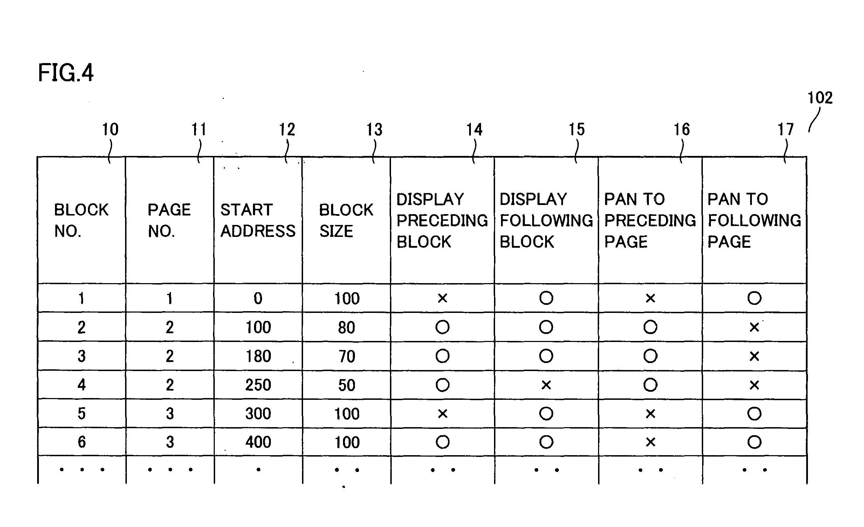

Figs. 2A and 2B show a flow chart of a procedure followed to generate subblock data 102. Fig. 3 shows document data dynamically varying its layout as an example of electronic data 101, and an example of data 101A corresponding to electronic data 101 divided for each logical page or having each page further divided for each small block. The Figs. 2A and 2B procedure is followed to generate the Fig. 4 subblock data 102. The Fig. 4 subblock data 102 includes block number data 10 corresponding to each block of data 101A to identify the block, page number data 11 specifying a logical page to which the block belongs, data 12 of a start address of the block with reference to the top of the file of electronic data 101, block size data 13, data 14 and 15 indicating whether preceding and following blocks' can or cannot be displayed, and data 16 and 17 indicating whether the current page may be panned to preceding and subsequent pages. Information indicating a feature of the structure of electronic data 101 includes data 11, and 14-17. Data 11, 16 and 17 are data referenced to perform a process for a corresponding block page by page, and data 16 and 17 are data indicating whether a subject to be processed may be moved (or changed) from the page to which a corresponding block belongs to a different page when data is processed for example to be displayed.

Data 14 or 15 indicates whether a corresponding block's data and data of a block preceding or following the corresponding block, i.e., data of a block having data 12 indicating a start address immediately preceding or following an address indicated by data 12 of a start address of the corresponding block, can be displayed on the same screen. Basically, preceding and following blocks straddling a logical page may not be displayed, otherwise they may be displayed.

Similarly, data 16 or 17 indicates whether data of a corresponding block and data of a block of a page immediately preceding or following a page including the corresponding block i.e., data of a block having page number data 11 indicating a page immediately preceding or following a page indicated by page number data 11 of the corresponding block, may be displayed on the same screen.

If that a block may be displayed is set in page break information corresponding to a logical page break, and a page break is introduced, a straddling block can simultaneously be displayed. Furthermore, such can also be set individually by user instruction.

Subblock data 102 is generated by a procedure, as will now be described with reference to the Figs. 2A and 2B flow chart assuming that the data is generated in data processing apparatus 100 at subblock data generator 117. It should be noted, however, that if any of server 110 and computer 115 generates the data it also follows a similar procedure.

The subblock data 102 generation procedure excluding step S305 is similar to that indicated in WO 02/103554 A1. Accordingly the procedure as a whole will simply be described, and only a characteristic process (step S305) that is not disclosed in the publication will specifically be described.

Initially, a user uses a keyboard, a mouse, a pen and/or the like (not shown) to designate electronic data 101 to be processed. If a decision is made that subblock data 102 corresponding to electronic data 101 does not exist, subblock data 102 is generated.

Subblock data generator 117 generates the Fig. 4 subblock data 102 from electronic data 101 read from storage medium 111 and received via input device 103 (or received from server 111 via network 114). To do so, initially extractor 118 sets a target block size value T (S301). Desirably, an appropriate block size is determined by the data processing apparatus 100 processing capability, the number of characters displayed on a screen, and factors that determine the same. Accordingly from these parameters target block size value T is set. Note that in setting value T, a default value previously provided to data processing apparatus 100 or a user designated value may be used.

Once target block size value T has been set at S301, the control proceeds with S302 and extractor 118 sets an area of X bytes from the top of the file of electronic data 101 as a block boundary search range. The value of X is set for example to a half of value T. Then at S303 extractor 118 extracts a candidate boundary within the search range.

A candidate boundary varies depending on the type of electronic data 101 of interest. For example if electronic data 101 is an XML document, the candidate boundary it is not a location of a tag, a comment or the like, nor a location in the middle of a character string; it is a location immediately before or after a tag, or a location at which page break information is set, as indicated in Fig. 3 by arrow AR, BR, CR.

Furthermore, if data processing apparatus 100 is a display device displaying an electronic book such as an XHTML document, then in addition to the above described restriction it is desirable that a location immediately after a newline tag, a paragraph's top, or a similar location at which displaying starts from the beginning of a line be set as a candidate boundary.

Then at step S304 the process branches in accordance with a condition based on the number of candidate boundaries extracted at step S303. More specifically, if there is no candidate boundary found, the process returns to step S302 and the search range is offset toward the file's bottom and step S302 and the following steps are performed similarly as has been described previously.

If there exists any candidate boundary then the process proceeds with step S305 and determinator 119 determines a position for division. More specifically, with reference to Fig. 2B, at step S3051 a decision is made as to whether a candidate boundary determined at step S304 as being present is a location of page break information indicated in the Fig. 3 document data or electronic data 101 by arrow AR, BR, CR. IF so the process proceeds with step S3502 and sets as a position for division a page break position corresponding to a location at which page break information is set. (See the Fig. 3 data 101A divided into blocks)

Otherwise, the process proceeds with step S3053 to select a candidate boundary closest to the center of the search range set at step S302 and set the selected candidate boundary as a boundary. Thus at step S305 whenever a decision is made that page break information has been selected as a candidate boundary, then at the location at which the page break information is set, portions preceding and following the page break information are divided into different blocks.

Then at step S306 acquirer 120 determines a position and hierarchical relationship of start and end locations of a block indicated at the position for division, as set by determinator 119, as seen from the top of the file, and obtains information indicating a feature of the hierarchical structure by one block.

Then at step S307 a decision is made as to whether this block's end is the file's end. If not the process proceeds with step S302 to continue the process for a subsequent block.

If the block's end is the file's end, then at step S308 generator 121 records in subblock data 102 the block information obtained from steps S301 to S307. When step S308 completes, the subblock data generation process ends. Subblock data 102 generated (see Fig. 4) is correlated with electronic data 101 and thus stored to storage medium 111.

### General Operation

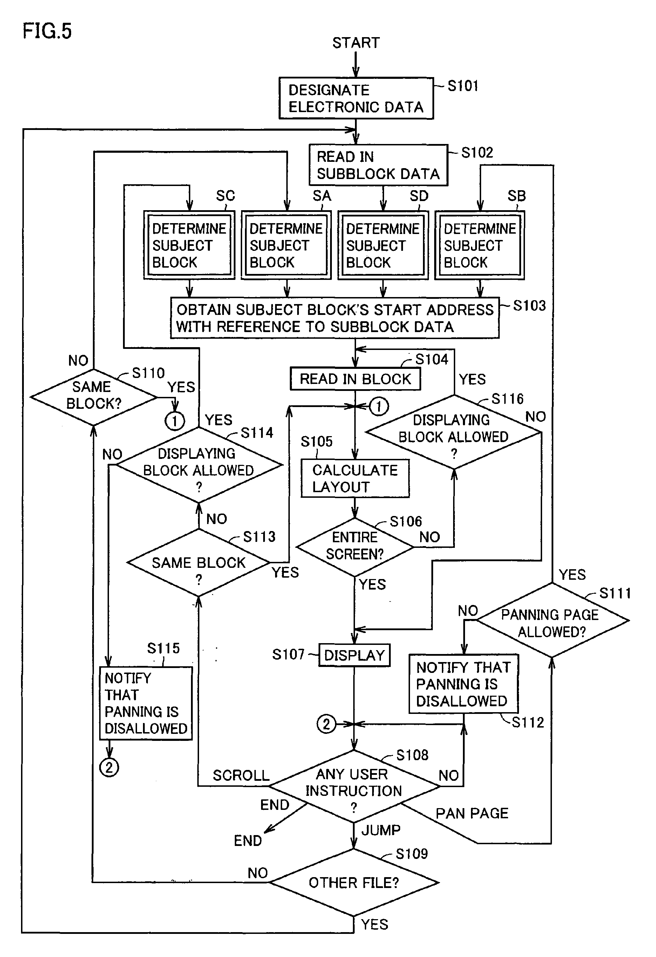

Data processing apparatus 100 operates on electronic data 101 and corresponding subblock data 102 when subblock data 102 is referenced to display electronic data 101 on display unit 108, by way of example, as will now be described with reference to the Fig. 5 flow chart.

Initially at step S101 a user designates via user instruction processor 107 electronic data 101 to be displayed. At step S 102 subblock data 102 previously prepared for electronic data 101 is read in via input device 103 to storage medium 111.

Then at step SD of determining a block as a subject a decision is made as to whether which block should be read in, and at step S103 subblock data 102 is referenced to obtain the subject block's start address data 12. More specifically, at step SD whenever electronic data 101 is designated and displayed, a subject block to be displayed is determined, for example as based on information of a setting for displaying indicating for example that electronic data 101 is displayed from its file's top, from start address data 12 and block size data 13 indicating a start/end location of each block of subblock data 102 read in at step S102.

Then at step S104 the subject block determined from electronic data 101 is read in via input device 103.

Then at step 105 data structure analyzer 104 employs a control code present in data of the subject block to analyze the data's hierarchical structure and layout calculator 106 employs a resultant analysis to calculate a layout provided within a display screen. If as a result at step S106 a layout is determined for the entirety of a display screen that display unit 108 has, then the process proceeds with step S 107 to display the subject block's data on display unit 108.

If at step S106 there is an area in the display screen that is still not determined in layout, then the process proceeds with step S 116 to determine whether a block preceding/following the subject block may be displayed from data 14 and 15 of whether blocks preceding and following subblock data 102 may be displayed. If at S116 a decision is made that the preceding or following block may be displayed, the process returns to step S104 to read the preceding or following block's data and at step S105 the read preceding or following block's layout process is performed to follow the layout screen obtained for the subject block. Following steps S106 and S 107 are similarly performed, as has been described previously. If at step S 116 the preceding and following blocks may not be displayed then the process proceeds with step S 107 to display data on a screen of display unit 108.

After step S 107 or display unit 108 displays the data, the process proceeds with S108 and awaits until the user issues an instruction. If at step S108 the user issues an instruction to end the display process, the display process ends.

If at step S108 an instruction is received to jump to a link or similar other area, the process proceeds with step S 109 to determine whether the area is located in a different file (electronic data 101) or its file (currently read electronic data 101). If the area is located in the latter, then the process proceeds with step S110 to determine whether the area's block is the same as the current block. If so then the process proceeds with step S105 and a process similar to that as has been described previously is performed. Otherwise, the process proceeds with step SA, which will specifically be described later, to determine a subject block. Thereafter, a process similar to that as has been described previously is performed. If the step S109 decision indicates that the area is a different file then at step S102 subblock data 102 prepared for this file (other electronic data 101) is read in. Thereafter, a process similar to that as has been described previously is performed.

If at step S108 the user issues an instruction to pan a page then at step S111 the subblock data 102 data 106 and 107 corresponding to the current block is referred to to determine whether the current page may be panned to preceding and following pages. If so step SB is performed or a subject block is determined in a process (as will be described hereinafter more specifically). Thereafter, step S103 and the following steps continue similarly as has been described previously. Furthermore, if the step S111 decision indicates that the current page may not be panned to the preceding nor following pages then the process proceeds with step S 112 to notify the user accordingly for example by: employing an indication on display unit 108; employing a sound via an audio output device (not shown), vibrating data processing apparatus 100; and the like. Alternatively the user may not be notified.

Then at step S108 the control awaits an instruction from the user. If at step S 108 there is an instruction from the user to scroll a screen to feed a line, and at step S 113 a decision is made as to whether content displayed subsequently as a result of scrolling in accordance with the user's instruction is the same as the current block. If so the process proceeds with step S 105 to perform a layout process based on a previously generated structure. Thereafter, step S106 and the following steps are continued similarly as has been described previously. Furthermore if the step S113 decision indicates otherwise then the process proceeds with step S 114 to make a decision from the subblock data 102 data 14 and 15 corresponding to the current block as to whether the preceding and following blocks may be displayed or the current block may be scrolled thereto. If so then step SC is performed or a subject block is determined in a process (as will be described later more specifically). Thereafter, step S 103 and the following steps are continued similarly as has been described previously.

If at step S 114 a decision is made that the current block may not be scrolled to the preceding or following block then the process proceeds with step S 115 to notify the user, possibly in a manner similar to those employed at step S 112, that scrolling and thus panning to feed a line is not allowed. The control then proceeds with step S108 and awaits the user's instruction.

Thus subblock data 102 can be referenced to read in electronic data 101 only by partial data on a block basis and process the data to display it. Data processing apparatus 100 can require only a small capacity of memory for a display process, regardless of the amount of electronic data 101 to be displayed, and can also process the data rapidly.

Furthermore, for each block, subblock data 102 holds data 14 and 15 that indicate whether preceding and following blocks may be displayed and are referenced to control feeding a line by scrolling and data 16 and 17 that indicate whether a current page may be panned to preceding and following pages and are referenced to control panning a page. Referencing these data to perform a display process can eliminate the necessity of searching electronic data 101 that should be displayed to rapidly feed and display a line and rapidly display a page break.

### SA: Process to Determine a Subject Block

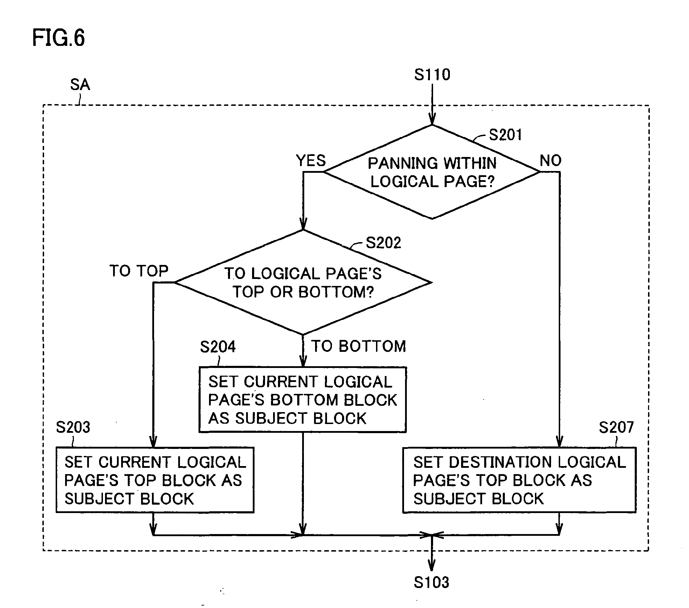

Reference will be made to the Fig. 6 flow chart to describe a procedure followed to determine a subject block by a jump, as indicated in Fig: 5 at step SA.

Initially at step S201 a decision as to whether the jump is made within the same logical page as the current subject block is determined with reference to subject block data 102 from whether a page number indicated by page number data 11 corresponding to the address of the destination of the jump matches that indicated by page number data 11 of the current subject block. If they match and thus a decision is made that the jump is made within the same logical page then the control proceeds with step S202 to determine whether the destination is the logical page's top or bottom from start address data 12 corresponding to page number data 11 of the logical page and start address data 12 of the preceding and following pages.

If the jump is made to the top then the control proceeds with step S203 and references subblock data 102 to set as a subject block the logical page's top block (a block of the logical page with start address data 12 indicating a minimum address), and proceeds with step S 103. If at S202 a decision is made that the jump made to the bottom then the control proceeds with step S204 and references subblock data 102 to set as a subject block the logical page's bottom block (a block of the logical page with start address data 12 indicating a maximum address, and proceeds with step S103.

If at step S201 a decision is made that the jump is not made within the logical page then the control proceeds with step S207 to set as a subject block the top block of a logical page of a destination specified with reference to subblock data 102, and proceeds with step S103.

### SB: Process to Determine a Subject Block

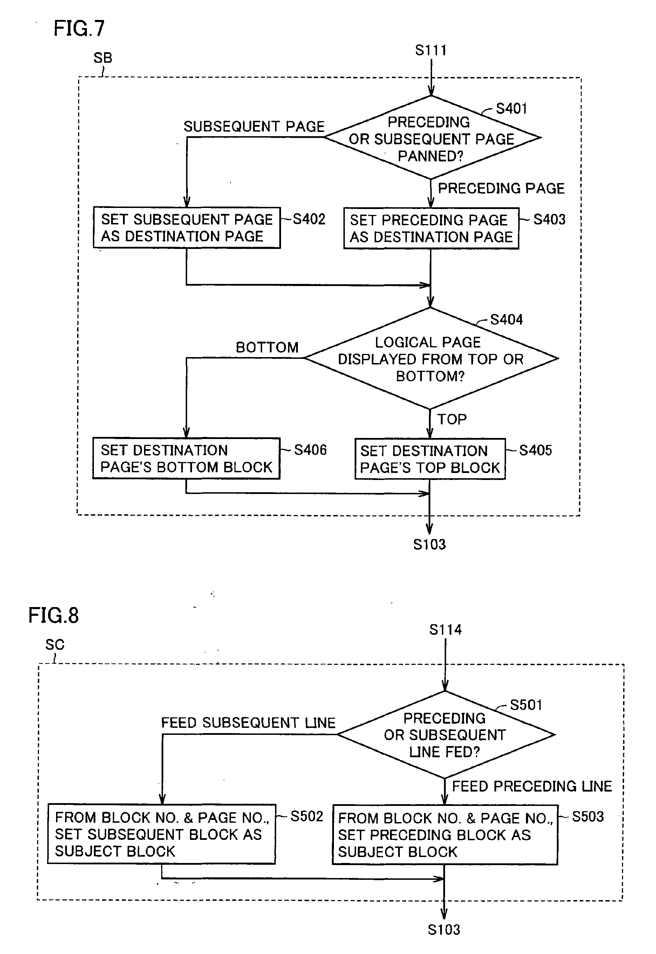

Reference will be made to the Fig. 7 flow chart to describe a procedure followed to determine a subject block by panning to a page, as indicated in Fig. 5 at step SB.

Initially at step S401 a decision is made as to whether a current page is panned to a preceding page or a subsequent (following) page. If the current page is panned to the subsequent page then the control proceeds with step S402. At step S402 the subsequent page specified with reference to the subblock data 102 page number data 11 is set as a destination and thereafter the control proceeds with step S404. At step S404 a decision is made as to whether a previously made setting indicates displaying a logical page from the top or the bottom. If the setting indicates displaying from the top then the control proceeds with step S405. At step S405 subblock data 102 is referenced to specify and set the destination page's top block as a subject block and then the process proceeds with step S103.

If at step S404 the setting indicates displaying from the bottom then the control proceeds with step S406 to references subblock data 102 to specify and set the destination page's bottom block as a subject block and then proceeds with step S103.

Furthermore if at step S401 the current page is panned to the preceding page then the control proceeds with step S403 to set as a destination the preceding page specified with reference to the subblock data 102 page number data 11. Then the control proceeds with step S404 and continues a process similarly as has been described previously.

### SC: Process to Determine a Subject Block

Reference will be made to the Fig. 8 flow chart to describe a procedure followed to determine a subject block by scrolling and thus feeding a line, as indicated in Fig. 5 at step SC.

Initially at step S501 a decision is made as to whether to feed a preceding line or a subsequent (following) line. If the subsequent line is fed, the control proceeds with step S502 to specify a subsequent block from the subblock data 102 block number data 10 and page number data 11 and set the specified subsequent block as a subject block, then proceeds with step S103. If at step S501 a decision is made that the preceding line is fed then the control proceeds with step S503.

At step S503 a preceding block is specified from the subblock data 102 block number data 10 and page number data 11 and set as a subject block. The control then proceeds with step S103.

### Logical page, Display Screen, and Block

In the present embodiment a logical page indicates a group of data obtained by division within electronic data 101. In particular, it indicates a group of data provided as divided by page break command information present in electronic data 101 (i.e., information indicated in Fig. 3 by arrows AR, BR and CR). The logical page does not depend on the size of the display screen of display unit 108 and may have an amount of data that cannot be displayed on the display screen at a time. The logical page can be said to correspond to a chapter in a printed book. The logical page is different from a displayed page, which is determined, on the display screen, by data associated with controlling displaying electronic data 101, as preset in connection with display unit 108 (e.g., font size, the number of characters for one line, and the like), and has a capacity of data that can be displayed on a display of display unit 108 at a time. It can be said to correspond to a page of a printed book.

In the present embodiment a "block" is irrelevant to the display screen of display unit 108 and herein indicates a logical page or a unit applied to divide it.

In the present embodiment, for electronic data 101 a logical page is handled as a maximum unit in order to cause subblock data 102 to hold page by page displaying controlling information. A block is an each unit further dividing a logical page. The block is a processing unit for saving memory consumption in a process performed to display electronic data 101. Data is not read in a large amount at a time and can instead be read and processed by blocks. Required memory capacity can be reduced.

### Specific Example of Allowing a Page to Be Panned

In the present embodiment in the process performed to display electronic data 101 content displayed can be updated page by page. More specifically, if display unit 108 displays document data 101A divided into blocks and a block with the corresponding subblock data 102 indicating block number data 10 of "1" is displayed (see Fig. 4), and there is also an instruction to display a subsequent logical page, then controller 109 can determine from the subblock data 102 data 16 and 17 corresponding to the currently displayed block that the currently displayed block may be panned to a preceding page but not to a following page. From this decision, at least one block number data 10 is specified that corresponds to page number data 11 indicating a page number of "2" corresponding to the following (or subsequent) page. Of the specified, at least one block number data 10, block number data 10 indicating a top block is specified, and in accordance with an address indicated by start address data 12 corresponding thereto the subsequent page's data is read from electronic data 101 and displayed.

### Specific Example of Disallowing a Page to Be Panned

If display unit 108 displays document data 101A divided into blocks and a block with the corresponding subblock data 102 indicating block number data 10 of "3" is displayed (see Fig. 4), and a user also issues an instruction to display a subsequent logical page, then controller 109 can determine from the subblock data 102 data 16 and 17 corresponding to the currently displayed block that the currently displayed block may not be panned to a subsequent (following) page, and notifies the user accordingly.

### Specific Example of Jumping to a Destination

If a jump or the like to a link is a jump to a block of a destination having a block number of "3" (see Fig. 4) and thereafter a user issues an instruction to display a logical page from the top, controller 109 references subblock data 102 to find that page number data 11 corresponding to block number data 10 indicating "3" is "2". Of all blocks with corresponding page number data 11 indicating "2", the page's top block, i.e., a block with start address data 12 indicating a minimum address can be specified to be a block with block number data 10 of "2", and the specified block's data is read from electronic data 101 and displayed from the top.

In the present embodiment electronic data 101 can be processed by employing subblock data 102. This allows only a portion of electronic data 101 to be read in and processed. The data can thus be processed with a small capacity of memory rapidly.

In processing electronic data 101 it is not necessary to search electronic data 101 for a logical page break and an indication of a restriction associated with displaying; previously prepared, corresponding subblock data 102 can simply be referenced to determine whether a block can be panned to another or whether a page can be panned to another, and a location of a destination to start displaying it. Electronic data 101 can rapidly be processed regardless of its size.

### Second Embodiment

The above described data processing apparatus 100's processing function may be implemented by a program. In the present embodiment this program is stored in a computer readable storage medium.

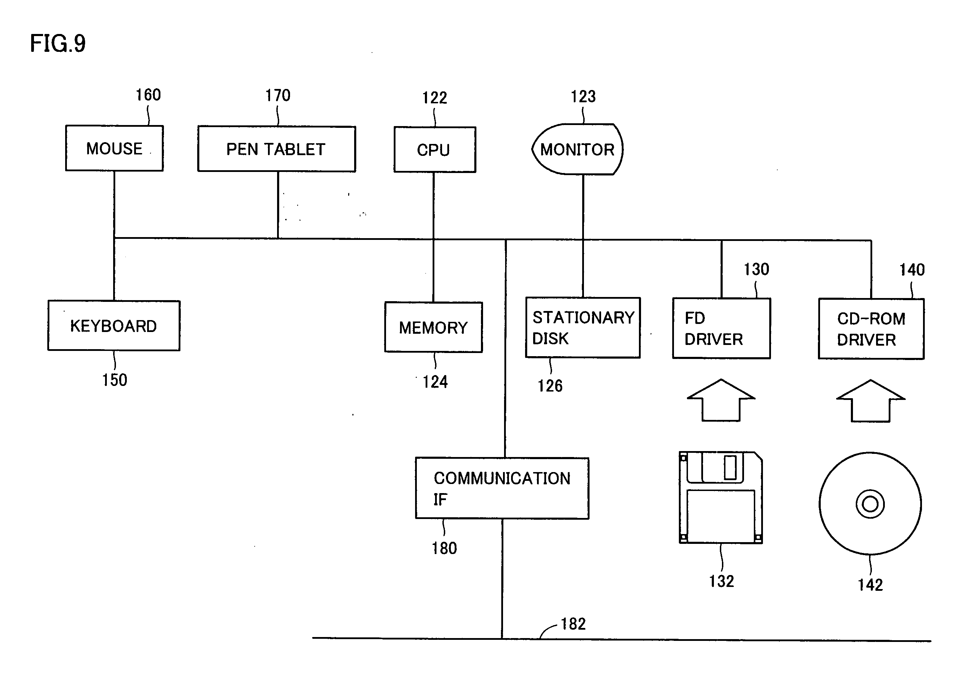

Fig. 9 shows a hardware configuration of a computer in a second embodiment. This configuration is applied to that of the data processing apparatus in the above described embodiment.

With reference to the figure, the computer includes a central processing unit (CPU) 122 corresponding to controller 109 for intensively controlling the computer, a monitor 123 corresponding to display unit 108 implemented by a cathode ray tube (CRT), liquid crystal or the like, a memory 124 configured including read only memory (ROM) or random access memory (RAM), a stationary disk 126, a flexible disk (FD) driver 130 detachably receiving and accessing an FD 132, a compact disk read only memory (CD-ROM) driver 140 detachably receiving and accessing a CD-ROM 142, a keyboard 150, a mouse 160 and a pen tablet 170 employed to enter user instructions, and a communication interface 180 communicatably connecting the computer and a communication network 182 corresponding to network 114. These components are interconnected by a bus. The computer may be provided with a magnetic tape device detachably receiving a magnetic cartridge tape and accessing thereto. The above storage medium can each correspond to storage medium 111.

For the above storage medium, a memory, e.g., memory 124, required to perform a process in data processing apparatus 100 may be a program medium, or as an external memory device a magnetic tape device (not shown) and CD-ROM device driver 140 or a similar program reading device may be provided and receive a storage medium in the form of magnetic tape or CD-ROM 142 to read program medium. In any case the stored program may be adapted to be accessed and executed by CPU 122, or in any case the program may once be read, loaded to a prescribed program memory area, such as that of memory 124, and read and executed by CPU 122. The program is loaded via a program assumed to be previously stored in the computer for the sake of illustration.

The above described program medium is a storage medium adapted to be separatable from the computer's main body and may be a medium including magnetic tape, cartridge tape or similar tape, a flexible disk, stationary disk 126 or similar magnetic disk or CD-ROM 140/Magnetic Optical disk (MO)/Mini Disk (MD)/Digital Versatile Disk (DVD) or similar optical disk, an IC card, including a memory card/optical card or similar card, or mask ROM, erasable and programmable ROM (EPROM), electrically EPROM (EEPROM)/flash ROM or similar semiconductor memory permanently carrying a program.

Furthermore in the present embodiment a variety of communication network 182 including the Internet is applicable. Accordingly, the storage medium may be a medium which receives a program downloaded from these communication networks and carries the program in flux. Note that content stored in the storage medium is not limited to a program and may be data.

While herein data processing apparatus 100 has been described as having the Fig. 9 configuration, data processing apparatus 100 may alternatively be applied to a mobile phone, a personal digital assistant (PDA) or similar mobile information equipment having a display function. In that case its configuration would be simplified in contrast to Fig. 10 to avoid impaired portability.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A data processing apparatus (100) processing electronic data (101) having a hierarchical structure with reference to subblock data (102) dividing said electronic data into a plurality of blocks to process said electronic data, comprising:
block reading means (103) reading from said electronic data (101) a block including designated data;
means (104) employing said subblock data for analyzing said designated data's hierarchical structure of said block read by said block reading means; and
means (105) employing said analysis means' resultant analysis for performing a prescribed process,
wherein said plurality of blocks are obtained by division in accordance with block boundary data associated with said electronic data (101) and including data indicating a page boundary.

2. The data processing apparatus according to claim 1, wherein said data indicating said page boundary indicates a position of page break indication information (AR, BR, CR) set in said electronic data (101).

3. The data processing apparatus according to claim 1, wherein said subblock data (102) includes page data (11, 16, 17) corresponding to each of said plurality of blocks and referenced to perform said prescribed process page by page.

4. The data processing apparatus according to claim 3, wherein said page data includes data (11) identifying a page including a corresponding one of said blocks.

5. The data processing apparatus according to claim 3, wherein said page data includes data (16, 17) indicating whether a subject to be processed may be moved from a page including a corresponding one of said blocks to a different page when said prescribed process is performed.

6. The data processing apparatus according to claim 1, wherein said electronic data (101) is electronic data displayed and said prescribed process is a process calculating a layout of said block read, and displaying said block in said layout.

7. A data processing apparatus (100) generating subblock data (102) referenced to divide electronic data (101) having a hierarchical structure into a plurality of blocks and perform a prescribed process for each said block, comprising:
extraction means (118) extracting a candidate boundary at each block boundary in dividing said electronic data (101) into a prescribed block size;
determination means (119) determining a position from extracted said candidate boundary for division into blocks;
acquisition means (120) acquiring information indicating a feature of said hierarchical structure for each block having said position for division determined by said determination means; and
generation means (121) generating for each block subblock data including positional information indicating said position for division as determined by said determination means and information indicating said feature of said hierarchical structure as acquired by said acquisition means,
wherein said candidate boundary includes a candidate indicating a page boundary.

8. A data processing method processing electronic data (101) having a hierarchical structure with reference to subblock data (102) dividing said electronic data into a plurality of blocks to process said electronic data, comprising the steps of:
reading in from said electronic data (101) a block including designated data (S104);
analyzing by said subblock data said designated data's hierarchical structure of said block read by said step of reading (S103, S111, S114); and
employing a resultant analysis obtained at the step of analyzing to perform a prescribed process (S105, S107),
wherein said plurality of blocks are obtained by division in accordance with block boundary data associated with said electronic data and including data indicating a page boundary.

9. A data processing method generating subblock data (102) referenced to divide electronic data (101) having a hierarchical structure into a plurality of blocks and perform a prescribed process for each said block, comprising the steps of:
extracting a candidate boundary at each block boundary in dividing said electronic data (101) into a prescribed block size (S303);
determining a position from extracted said candidate boundary for division into blocks (S305);
acquiring information indicating a feature of said hierarchical structure for each block having said position for division determined at the step of determining (S306); and
generating for each block subblock data including positional information indicating said position for division for each block as determined at the step of determining and information indicating said feature of said hierarchical structure as acquired at the step of acquiring (S308),
wherein said candidate boundary includes a candidate indicating a page boundary.

10. A data processing program causing a computer to execute a data processing method processing electronic data (101) having a hierarchical structure with reference to subblock data (102) dividing said electronic data into a plurality of blocks to process said electronic data, said method including the steps of:
reading in from said electronic data (101) a block including designated data (S104);
analyzing by said subblock data said designated data's hierarchical structure of said block read by said step of reading (S103, S111, S114); and
employing a resultant analysis obtained at the step of analyzing to perform a prescribed process (S105, S107),
wherein said plurality of blocks are obtained by division in accordance with block boundary data associated with said electronic data and including data indicating a page boundary.

11. A data processing program causing a computer to execute a data processing method generating subblock data (102) referenced to divide electronic data (101) having a hierarchical structure into a plurality of blocks and perform a prescribed process for each said block, said method including the steps of:
extracting a candidate boundary at each block boundary in dividing said electronic data (101) into a prescribed block size (S303);
determining a position from extracted said candidate boundary for division into blocks (S305);
acquiring information indicating a feature of said hierarchical structure for each block having said position for division determined at the step of determining (S306); and
generating for each block subblock data including positional information indicating said position for division as determined at the step of determining and information indicating said feature of said hierarchical structure as acquired (S308),
wherein said candidate boundary includes a candidate indicating a page boundary.

12. A machine readable storage medium having a program stored therein and causing a computer to execute a data processing method processing electronic data (101) having a hierarchical structure with reference to subblock data (102) dividing said electronic data into a plurality of blocks to process said electronic data, said method including the steps of:
reading in from said electronic data (101) a block including designated data (S104);
analyzing by said subblock data said designated data's hierarchical structure of said block read by said step of reading (S103, S111, S114); and
employing a resultant analysis obtained at the step of analyzing to perform a prescribed process (S105, S107),
wherein said plurality of blocks are obtained by division in accordance with block boundary data associated with said electronic data and including data indicating a page boundary.

13. A machine readable storage medium having a program stored therein and causing a computer to execute a data processing method generating subblock data (102) referenced to divide electronic data (101) having a hierarchical structure into a plurality of blocks and perform a prescribed process for each said block, said method including the steps of:
extracting a candidate boundary at each block boundary in dividing said electronic data (101) into a prescribed block size (S303);
determining a position from extracted said candidate boundary for division into blocks (S305);
acquiring information indicating a feature of said hierarchical structure for each block having said position for division determined at the step of determining (S306); and
generating for each block subblock data including positional information indicating said position for division as determined at the step of determining and information indicating said feature of said hierarchical structure as acquired at the step of acquiring (S308),
wherein said candidate boundary includes a candidate indicating a page boundary.
